# EUROPEAN PATENT APPLICATION

(11) **EP 4 342 925 A1**
(43) Date of publication of application: **27.03.2024**
(21) Application number: 22197836.4
(22) Date of filing: 26.09.2022
(51) Int. Cl.: C08G 59/24, C08G 59/40, C08G 59/50

(54) **PHOSPHONATE EPOXY THERMOSETS**

(71) Applicant: EMPA Eidgenössische Materialprüfungs- und Forschungsanstalt, 8600 Dübendorf (CH)
(72) Inventor: Wu Klingler, Wenyu, 9203 Niederwil (CH); Gaan, Sabyasachi, 9200 Gossau (CH)
(74) Representative: Kasche & Partner

(57) **Abstract**

The present invention is directed to epoxy thermoset polymers comprising phosphorous and phosphonate triple-bonded epoxy thermosets with the phosphonate forming chain members within the epoxy thermoset polymer network and being covalently triple bonded to the polymer network via a phosphonate P-C and two P-O bonds. The invention also encompasses methods for preparing these epoxy thermoset polymer, their uses and products comprising a thermoset epoxy polymer of the invention.

## Description

The present invention is directed to epoxy thermoset polymers comprising phosphorous and phosphonate triple-bonded epoxy thermosets with the phosphonate forming chain members within the epoxy thermoset polymer network and being covalently triple bonded to the polymer network via a phosphonate P-C and two P-O bonds. The invention also encompasses methods for preparing these epoxy thermoset polymer, their uses and products comprising a thermoset epoxy polymer of the invention.

Thermoset polymers are normally formed from liquid comonomer solutions and irreversibly result in a tri-dimensional cross-linked solid material after a curing step by external action, such as heating or UV irradiation. The unrivaled performance with low cost, easy availability, and versatility, makes them indispensable, e.g. in packaging, transport, and construction of consumer electronics, automotive, and aeronautics applications. They comprise about 20 percent of all polymeric materials manufactured today, with a worldwide annual production of about 65 million tons. Epoxy based resins account for about 70% of the thermoset polymers and more than 60% of the global production is used in the coatings industry. Epoxies are the most versatile family of engineering/structural adhesives due to their compatibility with many substrates, easy modification and widely varying properties.

The two major drawbacks of thermosets are their inherent flammability and their intrinsic resistance to deformation because of the highly covalently cross-linked networks, consequently rendering them not re-processable nor recyclable. The two major current approaches to challenge thermoset polymer's inherent flammability are the inclusion of inorganic or organic additives through physical doping and the reactive addition of flame retardants, e.g., DOPO, that form pendant covalent linkage to the terminal sites of the epoxy network. However, both methods result in leakage issues or insufficient flame retardancy.

US4070336A teaches hydrogen phosphonates, in particular bicyclic H-phosphonate, and polymer compositions containing them as flame retardants.

EP79300349A is directed to polymeric pentaerythrityl phosphonates useful as flame retardants for polyolefins.

EP0530874A2 reads on pentaerythrityl-phosphonates and their utility for fire-retardant thermoplastic polymer compositions.

WO2020075519 relates to polymeric pentaerythrityl phophonate flame retardants added to synthetic resins, in particular polyester-based resins.

In summary, phosphonate additives are known as fire retardant components for polymer compositions but these did not interact covalently with the polymer matrix.

Furthermore, European Polymer Journal, 2021, 144, 110236 teaches phosphate-based adaptable covalent epoxy networks with reprocessing and recyclability properties and flame retardancy. However, the thermoset polymer network is sensible to environmental impacts and pH.

It is the objective of the present invention to provide improved polymers, in particular epoxy thermoset polymers with improved properties, e.g. flame retardancy, self-healing, damage resistancy, re-processing capacity, pH and environmental stability, recyclability, and/or transparency.

This objective is solved in a first aspect by an epoxy thermoset polymer comprising 0.5 to 10 wt-% phosphorous, and- phosphonate triple-bonded epoxy thermosets, wherein the phosphonate forms a chain member within the epoxy thermoset polymer network and is covalently triple-bonded to the polymer network via a phosphonate P-C and two P-O bonds.

The term "epoxy thermoset polymer", as used herein, is meant to be interpreted as commonly used in the relevant polymer art, and, in particular, as indicating any organic polymer compound featuring a three-membered reacted epoxide moiety also known as epoxy/oxirane/- epoxide or ethoxyline group. An epoxy prepolymer with more than one epoxide group having low molecular weight is understood to be an epoxy resin. Epoxy resins for optional use in the present invention can be selected from various types, e.g. bisphenol-based, optionally bisphenol-A-based, aliphatic, cycloaliphatic, aromatic, bis, tris and multifunctional, halogenated, Novolak and glycidylamine based epoxy resins, etc. Thermosets, also called duroplastics, are heat-setting polymers with fixed polymer network structures at operating structures when reaction kinetics are frozen.

The epoxy thermoset polymer comprises 0.5 to 10 wt-% phosphorous based on the phosphorous atom weight, not the phosphonate. The phosphorous content can be determined by common analysis techniques in the art, e.g. by inductively coupled plasma optical emission spectrometry method (ICP-OES) (see the example section below). For example, the phosphorous content in the polymer comprises of the present invention can vary from 1 to 8 or 2 to 6 wt-% phosphorous.

The phosphonate component in the epoxy thermoset polymer of the invention forms an integrated chain member within the epoxy thermoset polymer network and is covalently triple-bonded to the polymer network via a phosphonate P-C and two P-O bonds. Without wishing to be bound by theory, it is the phosphonate polymer network integration that imparts the improved properties of the epoxy thermoset polymer, for example, the thermosetting properties in combination with excellent fire retardancy and re-processability and recyclability upon heat treatment and the resulting transesterification of the phosphonate P-O bonds, whereas the P-C bond stays in place within the epoxy network.

The polymer network-integrated phosphonate of the polymers of the invention can result in epoxy-based "vitrimer"-type thermoset polymers. The polymers of the invention and other vitrimers are a class of plastics, which are derived from thermosetting polymers and feature molecular, covalent networks, which can alter their topology by thermally activated bond-exchange reactions. At higher temperatures polymers of the invention and other vitrimers may flow like viscoelastic liquids, whereas at lower temperatures the bond-exchange reactions are immeasurably slow (frozen) and they perform like classical thermosets. Because of their bond-exchange reactions, these thermosets have utility as self-healing material and allow easy re-processibility in a wide temperature range.

In the polymers of the invention it is the dynamic associative P-O bonds that provide for self-healing, damage resistance and recyclability with easy operative treatment. The P-C bond of the phosphonate with the epoxy-based polymer network is hydrolytically more stable than the P-O phosphate bonds.

Depending on the epoxy reactants as starting material and the reaction conditions for preparing the epoxy thermoset polymers of the present invention, in further embodiments some further phosphonates may attach double or mono-bonded, e.g. terminally too.

The epoxy thermoset polymer of the present invention may be one, wherein the phosphonate in the polymer has formula (I) 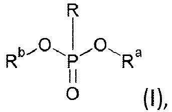 wherein
- R is a reacted epoxy moiety within the epoxy thermoset polymer,
- R^{a} and R^{b} are selected from reacted epoxy moieties and/or a further phosphonate moiety coupled to at least one reacted epoxy moiety within the epoxy thermoset polymer,
- all of R, R^{a} and R^{b} are directly or indirectly bound to reacted epoxy moieties.

In this embodiment the epoxy thermoset polymer of the invention features a phosphonate that is triple-bonded to the reacted epoxy moiety either directly or indirectly depending on the phosphonate reactant and the epoxy reactants used.

In an alternative embodiment the epoxy thermoset polymer of the invention is one, wherein the phosphonate in the epoxy thermoset polymer has formula (II) 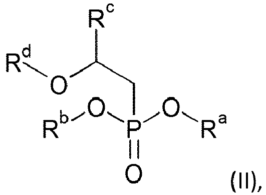 wherein
- R^{a} and R^{b} are reacted epoxy moieties and/or a further phosphonate moiety coupled to at least one epoxy moiety within the epoxy thermoset polymer,
- R^{c} is a reacted epoxy moiety, and
- R^{d} is hydrogen or a reacted epoxy moiety or a phosphonate moiety coupled to at least one reacted epoxy moiety within the thermoset epoxy polymer.
- Phosphonates or phosphonic acids are organic compounds containing -C-PO(OH)₂ or -C-PO(OR)₂ groups (wherein R is alkyl, aryl). They are not volatile and poorly soluble in organic solvents. For preparing polymers of the invention they can be integrated into the epoxy-based backbones by reactive incorporation through P-C bond formation with the epoxy resin.
- The epoxy thermoset polymers of the invention can be prepared with many suitable structurally different phosphonates, for example with mono, bis, tris or oligo H-phosphonates, optionally bis-H-phosphonates, optionally pentaerythrityl bis-H-phosphonates, 2,4,8,10-tetraoxa-3,9-diphosphaspiro[5.5]undecane, 3,9-dioxide,or an oligomer of pentaerythrityl bis-H-phosphonates.

The epoxy thermoset polymers of the present invention will vary depending on the epoxy reactants, the phosphonates, hardeners, curing agents, etc. For example, epoxy thermoset polymers of the present invention may 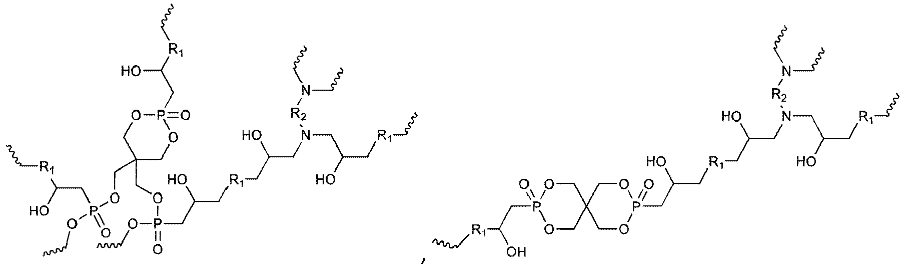 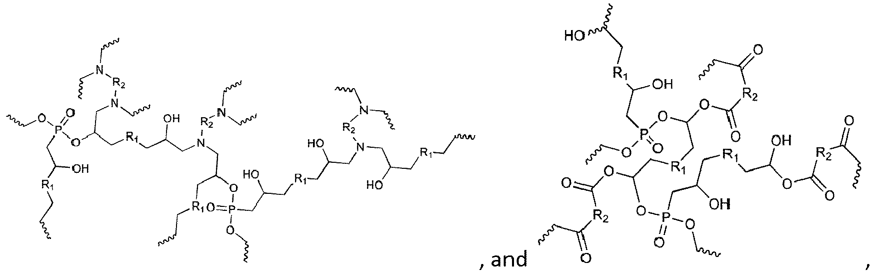 wherein
the wave lines form part of the epoxy thermoset polymer network, R₁ are epoxy resin moieties, and R₂ are epoxy hardener moieties, optionally amine or carboxylic epoxy hardener moieties.

The epoxy thermoset polymers of the invention may be prepared by many different epoxy reactants, for example epoxy moieties, optionally R₁ above, that are selected from the group consisting of bisphenol-based, bisphenol-A-based, aliphatic, cycloaliphatic, aromatic, bis, tris and multifunctional, halogenated, Novolak, glycidylamine-based epoxy resins and other epoxy resins based on the epoxy of formula (III) 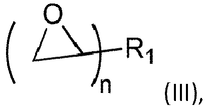 wherein R₁ is optionally selected from the group consisting of 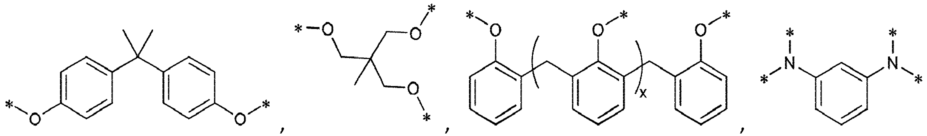 wherein
^{∗} are bonding points
n is 2 to 4; and
x is 0 to 4.

For curing, i.e. hardening or polymerizing epoxy resin reactants, epoxy catalysts, (for homopolymerization), optionally anionic catalysts such as tertiary amines or imidazoles, or cationic catalysts such as a boron trifluoride complex, and hardeners are used, optionally hardeners selected from the group consisting of amines, optionally polyfunctional primary amines, anhydrides, alkali, phenol and thiol based epoxy thermoset hardeners. Further optional epoxy embodiments for practicing the present invention are selected from epoxy formula (IV) 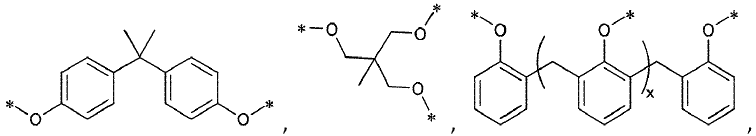 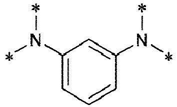 wherein n is 2 to 4; and x is 0 to 4.

For preparing the thermoset epoxy polymer of the invention the epoxy hardener moiety, optionally R₂, is optionally selected from the group consisting of amine epoxy hardeners, carboxylic epoxy hardeners, anhydride epoxy hardeners, acid anhydride epoxy hardeners, and acid epoxy hardeners, optionally selected from the group of amine epoxy hardeners according to formula (V)

R₂-(NH₂)ₘ (V),

wherein R₂ is selected from the group consisting of 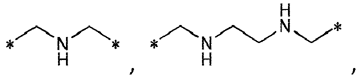 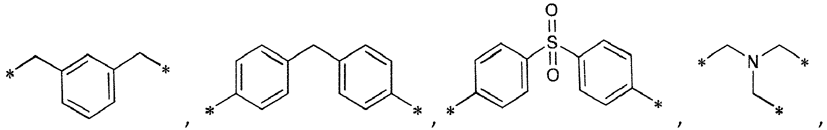 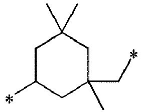 , and
m is 1, 2 or 3, ^{∗} indicates the attachment bond of R₂,
optionally selected from the group of acid anhydride and carboxylic acid hardeners, optionally 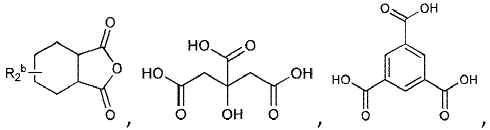
wherein R₂^{b} is H or CH₃.

A suitable catalyst for preparing the polymer of the present invention is, for example, an organic base, e.g. 1,8-diazabicyclo[5.4.0]undec-7-en or 1,5,7-triazabicyclo[4.4.0]dec-5-en) to form epoxy thermoset phosphonate P-C bonds within the epoxy thermoset chain. A base catalyst will promote deprotonation of H-phosphonates to nucleophiles and attack the electrophilic C of the oxirane C-O bond along with the ring opening to form P-C bonds.

In a further aspect, the present invention is directed to a method for preparing an epoxy thermoset polymer of the invention, for example, comprising the steps:
(a) providing epoxy resin reactants;
(b) adding, mixing and reacting an H-phosphonate, optionally selected from the group consisting of mono, bis, tris and oligo H-phosphonates, pentaerythrityl bis-H-phosphonates, 2,4,8,10-tetraoxa-3,9-diphosphaspiro[5.5]undecane, 3,9-dioxide, and oligomers of pentaerythrityl bis-H-phosphonates, with the epoxy resin reactants, optionally with organic base, optionally with 1,5,7-triazabicyclo[4.4.0]dec-5-en) (TBD), optionally heating, optionally heating to 50 to 90 °C;
(c) adding, mixing and reacting at least one epoxy thermoset hardener to the composition of (b);
(d) heating the composition, optionally heating from 50 to 200°C, optionally from 80 to 160 °C, optionally for 1 to 20, optionally 4 to 10 hours.
wherein optionally a transesterification catalyst can be added in step (b), (c) or (d) (vitrimer formation), optionally heating to activate transesterification.

Even though the transesterification catalyst can be added at any time, it optionally activates transesterification upon heating. For example, the transesterification can be added in step (b) but actually activates transesterification in step (d) upon heating the composition.

Step (b) is the oxirane ring opening and phosphonate introduction step to form a covalently bonded phosphonate-epoxy thermoset polymer with P-O and P-C bonds within the epoxy thermoset polymer chain. Step (c) is the resin hardening, wherein the polymer chains are at least partially connected with each other, optionally with an amine-based hardener as exemplified herein. Step (d) is a curing step, optionally in molds of various shapes, at higher temperatures or stepwise at different temperatures. As the skilled person appreciates the steps of hardening and curing may be performed in one or subsequent steps depending on the conditions (temperature, time, pH, catalysts, etc.) chosen.

The term H-phosphonate as used herein is meant to indicate mono- and diesters of phosphonic acid (H₃PO₃), also referred to herein as H-phosphonates, which are four-coordinate compounds and contain a characteristic H-P=O structural motif, which governs their unique chemical properties, with the structure (A) as below:

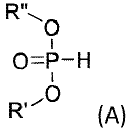

In one embodiment of the method of the invention the transesterification catalyst is added in step (b) or (c), optionally in step (b). Preferred transesterfication catalysts may be, e.g. 1,8-diazabicyclo[5.4.0]undec-7-en, 1,5,7-triazabicyclo[4.4.0]dec-5-en, or other transesterification catalysts, like zinc acetate.

Without wishing to be bound by theory it is understood that transesterification of the phosphonate components can occur simultaneously during the hardening and/or curing process, as free hydroxyl groups are been released constantly, which promotes a high degree of curing conversion.

For the method of the invention the epoxy resin reactants are selected, for example, from the group consisting of bisphenol-based, optionally bisphenol-A-based, aliphatic, cycloaliphatic, aromatic, bis, tris and multifunctional, halogenated, Novolak, bio-and glycidylamine-based epoxy resins.

A curing agent for use in the method of the invention is optionally selected from the group consisting of aliphatic or aromatic amines, carboxylic anhydrides, carboxylic acids, and polyols.

In a further aspect the present invention is directed to an epoxy thermoset polymer of the present invention obtained or obtainable by a method described herein.

The thermoset epoxy polymers of the invention are especially useful for fire safe materials, optionally fire safe polymers or composites, fire safe textiles, re-processable polymers or composites, damage reparable polymers, composites or coatings, 3D-printable polymers and composites, extrudable polymers and composites. These materials are fire-retardant, even more fire-retardant than phosphate-based fire retardant thermosets and can be reprocessed or damage-repaired upon heating to allow for transesterification without leaking and with high environmental stability.

For this reason products prepared from epoxy thermoset polymers of the present invention are improved in many ways. For example, the invention also encompasses products selected from the group consisting of fire safe materials, optionally fire safe polymers or composites, fire safe textiles, re-processable polymers or composites, damage repairable polymers, composites or coatings, 3D-printable polymers and composites, extrudable polymers and composites comprising a thermoset epoxy polymer according to any of claims 1 to 9.

In the following, the invention will be illustrated by way of representative examples and figures, none of which limit the scope of the invention beyond the appended claims.

### Figures

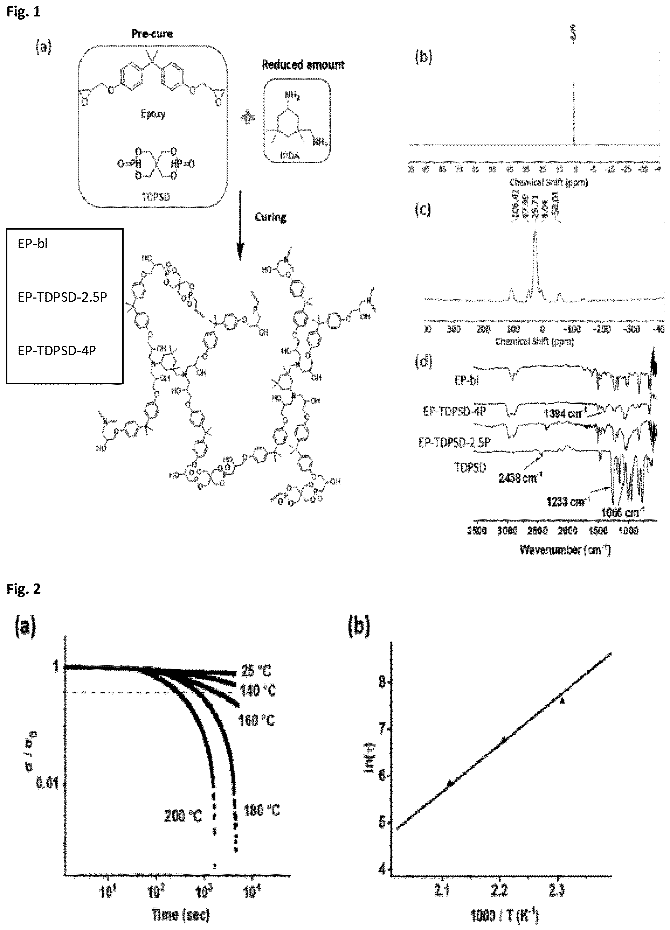

**Fig. 1** shows (a) a one-pot, two-step synthesis procedure of reactive spirocyclic bisphosphonate TDPSD cured flame retardant epoxy resin EP-TDPSDs. (b) Solution phase ³¹P NMR (³¹P-(¹H)) of spirocyclic bisphosphonate TDPSD in DMSO-d⁶, (c) solid state ³¹P NMR of EP-TDPSD-4P, and (d) FTIR spectra of epoxy resin blank (EP-bl), EP-TDPSD-2.5P, EP-TDPSD-4P and TDPSD.
**Fig. 2** shows (a) TGA and (b) DTG data of spirocyclic phosphonate TDPSD covalently incorporated EP-TDPSDs thermosets under nitrogen atmosphere, 10 °C min⁻¹, (c) DSC thermograms of the EP-TDPSDs, (d) TGA of EP-Vitrimer 2 (EP-TDPSD-6P) with varied amount of catalyst TBD, (e) stress relaxation curves of EP-Vitrimer 2 at 10 % strain under different temperatures up to 200 °C, where the stress (*σ*) is normalized by the initial stress (*σ*₀). The dotted line indicates the point at *σ*/*σ*₀ = 1/e (=0.3679), and (f) fitting of the relaxation times *τ* to the Arrhenius plots as a function of inverse temperatures.

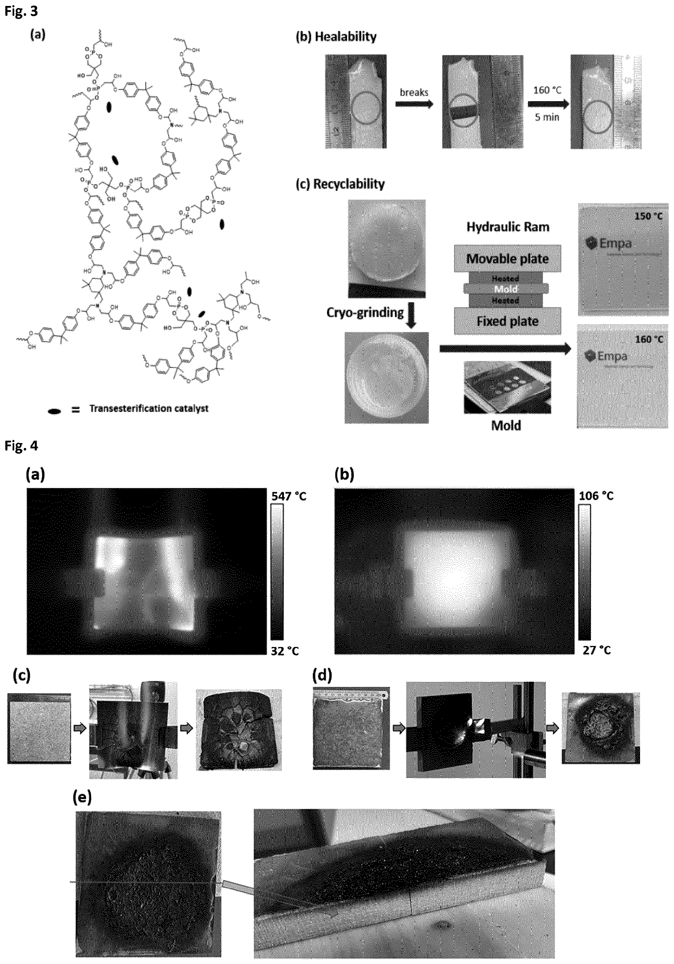

**Fig. 3.** (a) shows the schematic and chemical structure of a dynamic network; (b) Optical images of a piece EP-TDPSD-6P reconnected/healed at 160 °C for 5 mins after broken in the middle (circle); (c) Recyclability of the EP-TDPSD-8P vitrimer using hydraulic hot pressing for 5 min at varied temperatures under 6 MPa pressure.
**Fig. 4** shows EP-TDPSD coated and blank MDF samples measured with 5 minutes continuous ignition using Bunsen burner (butane gas), with (a) the maximal back temperature of the wood plate measured by IR camera, (b) optical images of the coated and untreated MDF samples after 5 mins ignition, and (c) cross section of the EP-TDPSD-2.5P coated MDF plate. All samples were located with distance to the blue flame ^{∼}50 mm (flame temperature ^{∼}1100 °C).

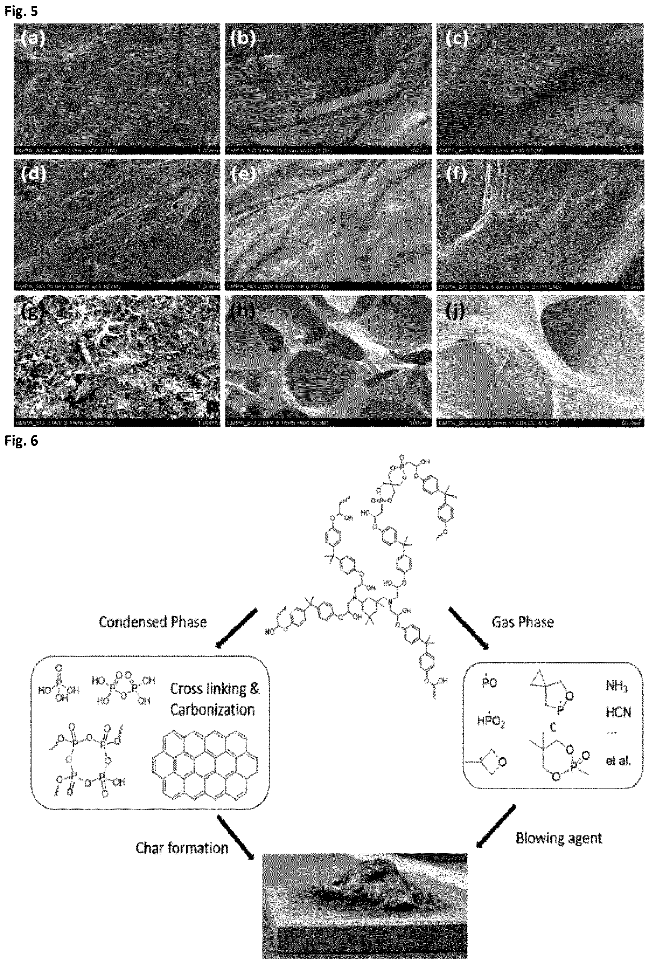

**Fig. 5** shows SEM images of the residual chars for EP- bl outer surface (a, b, and c), flame-retardant thermosets EP-TDPSD-1.2P outer surface (d, e, and f), and EP-TDPSD-1.2P inner surface (g, h, and j) at difference magnification obtained from the UL-94 tests.
**Fig. 6** illustrates the proposed decomposition mechanism of EP-TDPSDs (according to DIP-MS and TG-FTIR).

### Examples

### Materials

Pyridine, diphenylphosphite, 1,8-diazabicyclo[5.4.0]undec-7-en (DBU)and 1,5,7-triazabicyclo[4.4.0]dec-5-en (TBD) from Sigma-Aldrich (CH). Bisphenol A resin (Epikote^{™} Resin 827) and isophorone diamine (IPDA, Epikure^{™} Curing Agent 943) from Hexion Specialty Chemicals GmbH, DE.

### Example 1 - Synthesis of two epoxy thermoset polymer structures (1) and (2)

(1) pentaerythrityl bis-phosphonate via P-C bonds covalently networked epoxy thermoset: 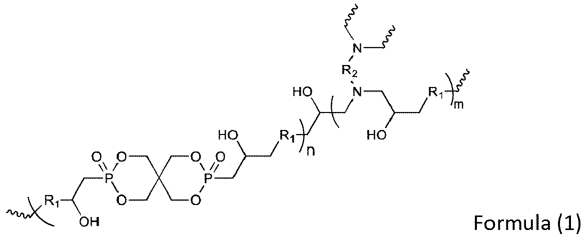 wherein
   R₁ = epoxy backbones, including Bisphenol-based, Novolac backbones, or any epoxy resin backbones 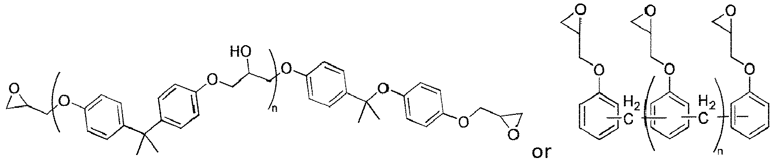
   R₂ = amine hardener backbones, including aliphatic and aromatic amine hardeners 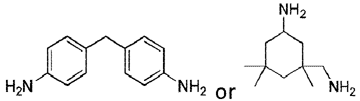
(2) Phosphonate networked thermosets via direct P-C bonds and P-O bonds simultaneously connected to the thermoset macromolecule). 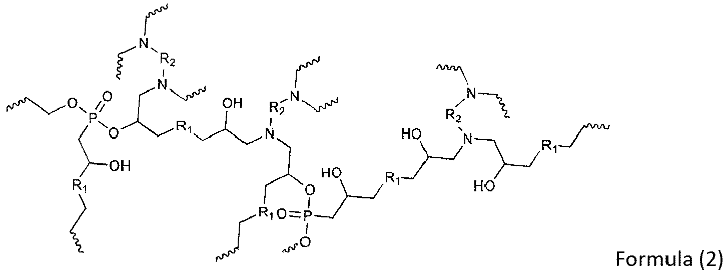 wherein R₁ and R₂ the same backbones as in (1) above

Epoxy thermoset polymers with formula (1) were obtained via a one-pot and two-step process. Commercially available DGEBA epoxy systems were modified by the addition of 2, 4, 8, 10-tetraoxa-3, 9-diphosphaspiro[5.5] undecane, 3, 9-dioxide (bis H-phosphonate) as reactive phosphorus moiety. First, the epoxy resin was reacted with bis H-phosphonate on the oxirane ring of epoxy. Subsequently, an aliphatic amine curing agent was used to cure the resin. The bis H-phosphite brought in sufficient associative dynamic covalent ester bonds (P-O) to the cross-linked thermosset; consequently, the transesterification reaction can be activated via heat to promote reprocessbility of resulting epoxy thermosets.

Specifically, bisphenol A diglycidyl ether (DGEBA), a certain molar ratio of the reactive bis -H-phosphonate (TDPSD) and transesterification catalyst (Triazabicyclodecene, TBD) were mixed, and left at 80 °C for 2 h. Later, amine hardener was added to the mixture at room temperature and mixed vigorously for 5 min. Subsequently, the mixture was cured stepwise at 100 °C for 2 h, another 2 h for at 140 °C, and final curing at160 °C for 2 h.

(2) Epoxy thermoset polymers with formula (2) were obtained via a similar approach as above. Firstly, commercially available epoxies were partially reacted with diethyl/dimethyl phosphite with catalyst TBD at 80° C for 5 h, and then amine hardeners were added into the prereacted mixture. Following a stepwise curing procedure at 100 °C for 2 h, another 2 h for at 140 °C, and final curing at 160 °C for 2 h, the epoxy thermosets were cured to achieve heat resistance, flame-retardancy and reprocessability.

### Example 2 - Synthesis of bis spiro-H-phosphonate TDPSD

Bis spiro-H-phosphonate core TDPSD was synthesized via a transesterification/phosphonation approach. (see Schafer et al., Inorganic Chemistry 2018, 57 (18), 11662-11672; Lord et al., ChemistrySelect 2016, 1 (10), 2188-2191. A double neck round bottle flask (100 mL) was charged with pentaerythritol (3 g, 22.03 mmol) and a magnetic stir bar. The flask was cooled to 0 °C with an ice-bath, and connected to a dropping funnel with pyridine (30 mL) and diphenylphosphite (9.5 mL, 49.6 mmol). The mixture was slowly dropped into the pentaerythritol powder under nitrogen atmosphere, and the resulting mixture was stirred for 2 hours at room temperature. THF (60 mL) was injected into the flask via syringe, and the resulting suspension was vigorously stirred for 10 min which led to a white insoluble precipitates. The reaction mixture was filtered, and the THF solution was decanted. The crude intermediate was washed two times with small amounts of THF (2^{∗}10 mL), and resulting solid residue was dried under vacuum for 6 hours to obtain a white powder, the target product (TDPSD, yield 65%). The synthesis route and detailed characterization data are presented in the SI.

### Example 3 - Preparation of TDPSD covalently incorporated epoxy resin EP-TDPSDs

The composition and acronyms of different thermosets synthesized herein are summarized in Table 1. In a representative process, bisphenol A diglycidyl ether (DGEBA), and certain molar ratios of the reactive bis spiro-H-phosphonate TDPSD (Table 1) were mixed and left at 80 °C for 2 h. Later, aliphatic amine (IPDA), and for vitrimers, transesterification catalyst TBD, were added to the mixture at room temperature and mixed vigorously for 5 min. Subsequently, the mixture was poured into different Teflon molds of different shapes and oven cured. A stepwise curing procedure at 100 °C for 2 h, another 2 h for at 140 °C and final curing (160 °C/2 h) followed.

**Table 1. The compositions of thermosets.**

| Thermosets | Bisphenol A resin (Epikote^{™} Resin 827) | Isophorendiamine (IPDA, Epikure^{™} Curing Agent 943) | TDPS D | DBU | TBD |
|---|---|---|---|---|---|
| EP-bl | 1 | 0.5 | 0 | 0 | / |
| EP-TDPSD-1.2P | 1 | 0.45 | 0.1 | 0.005 | / |
| EP-TDPSD-2.5P | 1 | 0.40 | 0.2 | 0.01 | / |
| EP-TDPSD-4P | 1 | 0.35 | 0.4 | 0.02 | / |
| EP-TDPSD-5P (Vitrimer 3) | 1 | 0.30 | 0.5 | 0.025 | 0.05 |
| EP-TDPSD-6P (Vitrimer 2) | 1 | 0.2 | 0.7 | 0.035 | 0.05 |
| EP-TDPSD-8P (Vitrimer 1) | 1 | 0.15 | 0.8 | 0.04 | 0.05 |

### Example 4 - Coating on wood (medium-density fibreboard)

Following the above mentioned thermoset preparation procedure, formulation EP-TDPSD-2.5P was used for coating application on medium-density fibreboard (MDF). The epoxy resin DGEBA (1 equivalent) was first reacted with 0.2 equivalent of bis spiro-H-phosphonate TDPSD (Table 1) at 80 °C for 2 h. Before applying the resin on MDF, 0.4 0.2 equivalent of aliphatic amine IPDA was added to the mixture at room temperature and mixed vigorously 5 minutes. Utilizing a thin film applicator (BGD 218, automatic film applicator, Guiged precise instrument), the resin mixture was applied homogenously on the surface of MDF with a sample gap of 1 mm. The coated MDFs were cured under 100 °C for 2 h, another 2 h for at 140 °C and followed by final curing (160 °C for 2 h). Finally, the coated MDFs were cut into 10 x 10 cm² for further testing.

### Example 5 - Characterization of epoxy thermoset polymers

### 5.1 NMR spectra

NMR spectra were recorded using a Bruker AV-III 400 spectrometer (Bruker BioSpin AG, Switzerland). ¹H and ¹³C chemical shifts (δ) were calibrated to residual solvent peaks. The ³¹P chemical shifts were referenced to an external sample with neat H₃PO₄ at 0.0 ppm.

Solid-State NMR (ssNMR) measurements were performed on a Bruker Avance III HD 400 spectrometer (Rheinstetten, Germany) employing a 4 mm CP MAS probe. Approximately 50 mg of pulverized thermoset sample was filled in teflon inert for ssNMR analytics. Spectra were recorded at a frequency of 161 MHz for 31P and 100 MHz for 13C, at 10 kHz spinning, respectively, at room temperature. Spectra were referenced to (NH₄)H₂PO₄ for ³¹P (0 ppm) and for ¹³C using adamantine (+38.5 ppm) as an external standard.

### 5.2 Phosphorus content

Phosphorus content of the composites was measured using the inductively coupled plasma optical emission spectrometry method (ICP-OES), on a 5110 ICP-OES (Agilent Switzerland AG, Basel, CH) apparatus. Sample preparation for ICP-OES consisted of mixing 100 mg of a sample with 3 mL HNO₃, followed by digestion using a microwave.

ATR-FTIR spectra were recorded with a Bruker Tensor 27 FTIR spectrometer (Bruker Optics, Ettlingen, DE), using a single reflection attenuated total reflectance (ATR) accessory with 4 cm-1 resolution, 32 scans and OPUS^{™} 7.2 software. In case of residues from fire tests, samples were collected from the burnt places and mixed properly prior to analysis.

### 5.3 Thermogravimetric analysis (TGA)

TGA was performed on a NETZSCH TG 209 F1 instrument (NETZSCH-Gerätebau GmbH, Selb, DE) under N₂ and air with a flow of 50 mL/min. Temperature range from 25 to 800 °C at a ramp of 10 °C/min was used for the analysis.

### 5.4 Differential scanning calorimetry (DSC)

DSC was performed on the DSC 214 Polyma instrument (NETZSCH-Gerätebau GmbH, Selb, DE) at a heating rate of 10 °C/min (20 to 200 °C), under a N₂ flow (50 mL/min) by running two repeating cycles. The glass transition temperature (*T_{g}*) was determined by using the "tangent method" as the meeting point of tangents to the curve, traced on the baseline and the peak side, on the low-temperature peak side.

### 5.5 UL 94 vertical burning tests

UL 94 vertical burning tests of the thermosets flammability were assessed according to IEC 60695-11-10, with sample size of 13 x 125 x 3 mm³.

### 5.6 Cone calorimetry

Cone calorimetry (Fire Testing Technology, East Grinstead, London, UK) was performed with an irradiative heat flux of 35 kW/m2 (ISO 5660 standard) on a specimen (100 x 100 x 3 mm³) placed horizontally without any grids. Parameters such as heat release rate (HRR), peak of heat release rate (pHRR), average specific extinction area (SEA), total smoke release (TSR), total heat release (THR) and the final residue were recorded.

### 5.7 Direct inlet probe mass spectroscopic (DIP-MS)

DIP-MS measurements were carried out using a Finnigan/Thermoquest GCQ ion trap mass spectrometer (Austin, TX, USA) equipped with a DIP module. DIP-MS was useful to detect possible volatile products. Nearly 1 mg of composite sample taken in a quartz cup located at the tip of the probe was inserted into the ionization chamber. Measurements were performed at an ionization voltage of 70 eV, temperature of the ionic source of 200 °C, <10-6 mbar pressure and probe temperature ramp 60 °C/min from 30 to 450 °C.

### 5.8 Scanning electron microscope (SEM) and Energy dispersive X-ray spectra (EDX)

SEM and EDX were recorded using a Hitachi S-4800 scanning electron microscope (Tokyo, Japan) equipped with Inca X-sight device from Oxford Instruments (Tokyo, JP). During SEM measurements, acceleration was maintained at 2 kV and with emission current of 10 A at a working distance of 8 mm. For EDX measurements, acceleration was maintained at 20 kV and with emission current of 15 mA at a working distance of 15 mm.

### 5.9 Rheological tests

Rheological tests were carried out on an Anton Paar Physica 301 MCR rotational rheometer (AT). All tests were performed with a parallel plate fixture (plate diameter of 25 mm and gap of 1 mm). The EP-Vitrimer sample was thermally processed into (1 mm plates) using a hot press at 140 °C. The plates were then dried in a vacuum oven overnight at 80 °C prior to the measurements. Stress relaxation experiments were conducted after a 10 min temperature equilibration (from 140 to 200 °C), a 5 % strain step was applied and the stress was monitored over time. A constant normal force of 10 N was applied during all the measurements to ensure a good contact of the material with the parallel plates.

### Results and discussion

### Result 1 - Synthesis of thermosets containing phosphonate moieties and their chemical and physical characterization

A one-pot and two steps procedure was developed to synthesize multifunctional transparent epoxy thermoset with varied TDPSD contents **(****Fig. 1****)**. The chemical structures of the modified epoxy resins were confirmed by NMR spectroscopy (¹H, ¹³C, ³¹P, ¹H-¹H COSY and ¹H-¹³C HMQC), FTIR spectroscopy and element analysis. The ³¹P NMR (³¹P-(¹H)) spectra of TDPSD and the solid state ³¹P NMR of the modified thermoset are displayed in **Fig. 1****.**
From **Fig. 1b****,** the decoupled ³¹P NMR spectra of TDPSD shows a single peak at 6.49 ppm. In order to confirm the full conversion of TDPSD and the formation of P-C bond, solid state ³¹P NMR of the EP-TDPSD-4P epoxy powder was performed which confirms the disappearance of the P-H signal at 6.49 ppm. The presence of new signals centered at 25.71 ppm can be assigned to P-CH₂- decoupling **(****Fig. 1c****)**. This confirmed the not hydrolysable P-C bond formation and the covalent incorporation of the P moiety into the thermoset network. Unlike phosphoester linkages (P-O), the linkage of the phosphorus moiety via a robust P-C bond to the resin network offers hydrolysis stability and prevents its potential leaching during usage and recycling. In addition, the presence of phosphorus in the thermoset network offers fire protection. The reactive P-H bond of TDPSD allows direct covalent linkage to the epoxy, which can result in optimized fire performance at lower P loadings compared to a non-reactive approach. To further characterize the thermoset network, ¹³C CP MAS ssNMR spectroscopy was performed on EP-TDPSD-2.5P and EP-TDPSD-4P samples.

The FTIR spectra of TDPSD, epoxy resin blank (EP-bl), the TDPSD cured epoxy resin EP-TDPSD-2.5P and EP-TDPSD-4P are shown in Fig. 1. The absorption peak around 2438 cm⁻¹ as shown in Fig. 1d, is attributed to the P-H bond in TDPSD, disappears in EP-TDPSD-2.5P and EP-TDPSD-4P. This disappearance illustrates the full reaction of the TDPSD with the epoxy matrix. The absorption peaks P-O-C appears at 1066 cm⁻¹ for the modified thermoset. The peaks around 1607 cm⁻¹, 1510 cm⁻¹ and 1233 cm⁻¹ correspond to the aromatic ring of the epoxy structure and P=O of the TDPSD phosphorus moiety. Most importantly, the formation of the P-C bond is confirmed by the appearance of an absorption band at 1394 cm⁻¹, which is absent in TDPSD and EP-bl. Thus, it is clear that bis-H-phosphonate TDPSD was covalently incorporated into the epoxy matrix through the one pot, two steps synthesis method.

### Results 2 - Fracture morphology of the novel epoxy thermoset polymers

The morphology comparison of the fractured surfaces of EP-TDPSD-2.5P and EP-bl were investigated by scanning electron microscopy. The smooth surface of fractured pure epoxy resin display regular cracks, attributing to its relatively poor fracture resistance as reported for pure epoxy thermosets. EP-TDPSD-2.5P showed a relative homogeneous micro fracture morphology. Unavoidably, large scale bubbles are formed in the one pot, two steps co-curing procedure, fortunately without significant phase separation. The general uniform fractured structure of EP-PTODP-2.5P indicates a homogeneous distribution of the reactive TDPSD in the cured epoxy matrix. This observation indicates that the reactivity of TDPSD with epoxy resin was fully utilized through the one-pot and two-steps process by reacting TDPSD with epoxy beforehand and then fully cured with hardener.

### Result 3 - Thermal property

Highly cross-linked materials, such as epoxy thermosets, have a softening temperature *T_{g}* (the glass transition temperature), which determines its specific application. The origin of the softening via the glass transition is due to increased free volume of chains upon heating beyond *T_{g}*. Along with softening, the materials eventually show fluidity upon further heating. Conventional epoxy thermosets do not show fluidity upon heating because of its highly cross-linked network structure formed from stable bonds and restricted free chain motion. As a consequence, fully cross-linked thermoset materials lose their recyclability due to the formation of a permanent network structure. However, the introduction of associative dynamic covalent P-O ester bonds in the thermoset enable their potential recyclability without losing thermal stability. Given the circumstances that sufficient ester bonds (P-O) are already existing in the EP-TDPSDs epoxy thermosset, it was predicted that the epoxy network could repair via transesterification reaction under external stimuli when defects arise. Normally, the recycling temperature is located above the *T_{g}* and the initial decomposition temperature (*Tₒₙₛₑₜ*). Therefore, the *T_{g}*s and *T*ₒₙₛₑₜs was investigated for determining the recycling temperature ranges with the increased amount of TDPSD.

The *T*_{g}s of EP-TDPSDs were evaluated by DSC, which is generally ascribed to the segmental motion of the polymeric networks, and *T*_{g} is determined by the degree of freedom for the segmental motion, cross-linking and entanglement constraints, and the packing density of the segments. TDPSD is bifunctional in nature and reacts with the epoxy resin to form linear macromolecules, which promotes segmental motion and inhibits cross linking. Therefore, all EP-TDPSD thermosets exhibited a lower *T*_{g} than EP-bl (155 °C), as shown in Table 2, due to the dynamic free chain motion with higher TDPSD content.

The thermal stabilities of the EP-TDPSDs with varying P contents were evaluated by TGA under an inert atmosphere. The novel epoxy thermoset polymers exhibit good thermal stability, the temperatures of 5% mass loss (*T*ₒₙₛₑₜ) for all samples are above 240 °C. Although *T*ₒₙₛₑₜ decreases for the EP-TDPSD thermosets (Table 2), compared to 351.7 °C for EP-bl., EP-bl shows one-step mass loss in the temperature range of 300-450 °C, while the EP-TDPSDs exhibit apparently two or more thermal decomposition stages in the same range until 370 °C with an additional shoulder that extends over a range of approx. 100 °C. Additionally for EP-TDPSDs, a small decomposition step (approx. 9 wt %) appears at 455 °C. The data obtained above indicate the optimal reprocessing temperature, which lies between the glass transition temperature and the initial decomposition temperature (230 °C > *T*ᵣₑ > 94°C).

The transesterification catalyst, TBD, has negligible effect on the thermal stability of the EP-TDPSD thermosets. Even though the addition of TDSPC to the thermoset matrix catalyzes the decomposition to lower temperatures, a larger amount of char residue is formed at temperatures above 400 C. In comparison of 5.8% char residue for EP-bl, EP-TDPSD-2.5P has almost three times (16.7%, Table 2) char residue, and EP-TDPSD-6P has significantly 5 times (28.1%) char residue. This indicates the potential condensation phase driven good flame retardancy of EP-TDPSDs.

### Result 4 - Recyclability and reparability

Considering sufficient associative dynamic phosphonate ester (P-O) bonds exist in the EP-TDPSDs, transesterification reaction occurs at elevated temperature above *T*_{g}. And the trancesterification induced dynamic bond-exchange within the network is a unique property and indicator for re-processable thermosets, which can be monitored by rheological stress relaxation. When heated up the internal stresses can be released and thus the viscosity will be reduced. Among the series of epoxy thermoset designed herein, EP-TDPSD-6P revealed great stress-relaxation at high temperatures (more than 140 °C), meanwhile there was negligible stress-relaxation at room temperature. Fig. 2a presents the stress-relaxation curves for EP-TDPSD-6P at various temperatures, where the stress (*σ*) normalized by the initial stress (*σ*₀) was plotted as a function of time. It follows a simple Arrhenius law with an activation energy of ^{~}75 kJ/mol K as shown in Fig. 2b. The temperature-dependent transesterification is in the network, which indicates the potential re-processbility of the material.

**Table 2. Thermal analysis results obtained from DSC and TGA measurements for epoxy thermosets with increasing amount of TDPSD under nitrogen atmosphere.**

| Samples | *T*_{g}(°C) | *T*ₒₙₛₑₜ*^{b}*(°C) | Tₘₐₓ*^{c}*(°C) | Residual yield at 800 °C (w %) |
|---|---|---|---|---|
| EP-bl | 155.6 | 351.7 | 369.5 | 5.8 |
| EP-TDPSD-1.2P^{a} | 148.6 | 303.6 | 340.3 | 12.0 |
| EP-TDPSD-2.5P | 139.3 | 295.7 | 340.5 | 16.7 |
| EP-TDPSD-4P | 131.7 | 300.8 | 342.4 | 24.0 |
| EP-TDPSD-5P (EP-Vitrimer 3) | 113.4 | 257.3 | 337.2 | 24.6 |
| EP-TDPSD-6P (EP-Vitrimer 2) | 107.1 | 239.6 | 332.1 | 28.1 |
| EP-TDPSD-8P (EP-Vitrimer 1) | 94.2 | 236.8 | 331.2 | 29.7 |

| | | | | |
|---|---|---|---|---|
| *^{a}* Abbreviation of the spirocyclic phosphonate co-cured epoxy resin. *^{b}* Onset decomposition temperature, at which the thermoset undergoes 5 wt % weight loss. *^{c}* Characteristic temperature, at which maximum rate of weight loss occurs. | | | | |

To demonstrate the healing capability of the synthesized vitrimers the surface of samples were scratched with a razor blade (Figure S7), and exposed to 160 °C in a pre-heated oven for 5 min, the scratches disappeared, and the sample became smooth. SEM analysis confirmed the detailed microstructure reparability of the TDPSD co-cured EP-TDPSDs. The scratched epoxy surface appear as a coarse, fractured and granular crack under SEM. After exposure to heat the crack gets smoother and consecutive. To demonstrate full healing capacity of EP-TDPSD-6P thermoset when exposed to external mechanical damage (Fig. 3a), a piece of EP-TDPSD-6P was completely broken in two pieces (Fig. 3b). The broken pieces were put together and exposed in a pre-heated oven under 160 °C for 5 min. The broken parts could rejoin fully without additional force or treatment (Fig. 3b) demonstrating its superior healing capacity. The above observed macroscopic flow and reparability could demonstrate the intrinsic malleability and healability of the EP-TDPSD-6P, which is in the end mediated through the rearrangement of the thermoset network via phosphonate transesterification.

Thermal-mechanical recycling process is illustrated in Fig. 3c. In order to recycle the EP-TDPSD-6P bulk plate, it was grinded into opaque white powder via cryo ball milling. Then the fine powder is collected and evenly spread in a rectangular-shaped metal mold. The set of samples were hot-pressed at 150 °C and 160 °C at 6 MPa pressure for 5 min. Afterwards the powder was fused into transparent and integrate plates again (Fig. 3c). From the rheological studies, the modulus of the epoxy thermoset at the recycling temperature was observed as quite low. Therefore, upon heating the powder liquefied and fused together under hot press. These epoxy thermoset powders can be straightforwardly molded into desired shape by hot compression. The recycling circle can be repeated up to three times without dramatic mechanical property decrease. The dynamic P-O bonds allow the chain interpenetration and formation of new crosslinks. Under same re-/processing conditions the vitrimer thermosets with higher P content (more P-O bonds) gave homogenous and integrated re-pressed plates. which is in agreement with of the predicted transesterification mechanism.

### Results 5 - Fire performance and potential application of the epoxy thermoset vitrimers

From the TGA experiments, it was observed that the char residuals at 790 °C for EP-TDPSD-1.2P, EP-TDPSD-2.5P and EP-TDPSD-4P increased significantly to 12.0 %, 16.7% and 24.0%, compared to a meagre 5.8% for EP-bl. This can be attributed to the addition of the reactive TDPSD which can promote the char formation and decrease the mass loss of epoxy during the main stage of thermal decomposition. In particular the pentaerythritol component of TDSP is known to be an excellent char former. The weight loss of the vitrimers at 370-470 °C is attributed to the further decomposition of char formed in the initial stage, which is consistent with the result of earlier reports.
The epoxy thermosets with and without reactive spirocyclic phosphonate TDPSD were subjected to vertical flame spread test (UL 94) to assess their flammability. Vitrimer with 2.5% of P-content (EP-TDPSD-2.5P) achieved a UL 94-VO classification. The right concentration of TDPSD in the epoxy thermosets matrix is crucial to obtain UL 94-V0 classification, as EP-TDPSD-1.2P containing only 1.2 wt% P burns partially and does not achieve any classification.

### Results 6 - Coating application on medium-density fibreboard (MDF)

The demonstrated exceptional fire-resistance capability of the intumescent EP-TDPSDs films make them a suitable thin coating candidate for inflammable material protection, especially in the transportation and building industries. Based on the excellent fire inhibition and char foaming property in the small scale fire test discussed above, 1 mm EP-TDPSD-2.5P coating was applied on the surface of MDF samples, and investigated for their fire resistance and heat isolation properties, as shown in **Fig. 4****.**

Even after five minutes of continuous ignition with bunsen burner (flame temperature more than 1100 °C), the EP-TDPSD-2.5P coated MDF plate did not catch fire with its backside temperature reaching a maximum temperature of 106 °C (Fig. 4b and d), while the MDF blank burned completely with backside temperature reaching almost 550 °C(Fig. 4a and c). On removal of surface intumescent char, the underlying MDF matrix was found to retain its integrity (Fig. 4e). EP-TDPSDs has a perspective for flame-retardant surface treatments, including the potential for industrial implementation. The weight loss of the MDF blank is about 74%, in contrast, only 6.8% was observed for the EP-TDPSD-2.5P coated MDF plate.

### Results 7 - Fire inhibition mechanism

The decomposition mechanism of composites and the influence of the various additives on the released gases was investigated in detail by mean of TGA-IR and DIP-MS analyses. It was observed that EP-TDPSD-2.5P produces in general much less volatile products than EP-bl, the volatile products from EP-bl increase with temperature, while EP-TDPSD-2.5P produces the most gaseous products after the *T*ₒₙₛₑₜ and then decreases gradually after 400 °C. At 340 °C (*T*ₘₐₛ) EP-TDPSD-2.5P generates the most decomposed gaseous products and afterwards the gaseous products drops down. Unlike the EP-bl, it emits increasing amount of gaseous decomposition products when temperature increases.

At 350 °C the infrared absorption peaks at 885 cm⁻¹, about 931 cm⁻¹ and 966 cm⁻¹ were detected for EP-bl, which were attributed to alkene species and NH₃, respectively. Such peaks with low intensity were observed for EP-TDPSD-2.5P. Instead peaks at 746 cm⁻¹ and 1056 cm⁻¹ correspond to P-O containing species. Peak around 1343 cm⁻¹ attributing to P-C containing were observed. With increased temperature, the sharp peaks around 1510 cm⁻¹ corresponding to aromatics and aliphatic volatile components (3000-2840 cm⁻¹) in EP-bl is significantly suppressed for EP-PTODP-2.5P. In contrast, carbonyl peaks (1790-1680 cm⁻¹) observed for EP-bl generally disappearred for EP-TDPSD-2.5P after 400 °C. Furthermore, all nitrogen containing volatile spieces were very minor or invisible for EP-TDPSD-2.5P, as peaks at 1605 cm⁻¹, 1363 cm⁻¹ and 775⁻¹ assigned to N-O species, 1440⁻¹, 1458⁻¹, 2090⁻¹ and 2246 cm⁻¹ for C-N containing highly toxic species were absent or considerably reduced. At the same time, for EP-TDPSD-2.5P peaks corresponding to H₂O were inconspicuous (fussy peaks around 3750-3500 cm⁻¹ and 2000-1200 cm⁻¹).

Simultaneously, DIP-MS analysis indicated that the decomposition of the EP-TDPSD-2.5P produced a large amount of phosphorous species from 200 to 400 °C, whereas lower relative abundance of the volatile compounds was observed for the EP-bl (Figure S14). The formation of major fragments like PO radical (m/z 47) and 3-methyloxetane radical (m/z 71) initiates after 200°C already, while the HPO₂ radical (m/z 64) and other P-containing fragments evolved after 300 °C. These radicals in the early gas phase confirm the decomposition of TDPSD, which results in a strong flame inhibition action of TDPSD from the early stage. In air PO radical can act in the gas phase and consume the high energy H• and OH• species in a flame by recombining with them and interrupting the combustion chain reaction, which leads to fire self-extinguishing or favors flame inhibition. The above results of gaseous pyrolysis products were quite consistent with the TGA-IR results obtained in nitrogen atmosphere. The degradation of EP-TDPSD-2.5P forms P-containing radicals, which can seize other active free radicals in the gas phase and restricted burning.

### Results 8 - Analysis of the Char Residue

It is understood that phosphorus-based intumescent flame retardants play very critical part in the condensed phase, and therefore, exploring the structure, morphology, and chemical composition of the char residue after the fire tests can contribute to the understanding how TDPSD works in the flame retardanct epoxy matrix. The surface morphology and elemental composition of EP-TDPSD-1.2P after combustion was characterized using scanning electron spectroscopy (SEM, Fig. 5) and energy dispersive X-ray spectrometry (EDS) mapping.

Compared to the compacted and fissured char residue of EP-bl (Fig. 5a, b and c), EP-TDPSD-2.5P left a distinguish char with inner and outer layer differences. The residual outer layer (Fig. 5d, e and f) exhibited a coherent and sealed appearance, while the inner structure (Fig. 5g, h and j) was intumescent and multi-porous. The closed outer layer could act as an effective physical barrier and lower gas flow. Besides, this porous char structure would prevent the heat transfer and the escape of volatiles. Therefore, it was assumed that the inner layer was efficiently isolating heat and outer layer was blocking oxygen when EP-TDPSDs catch fire. EDX showed a unified P distribution on the char residue according to element mapping and overlapping, which indicated also that the covalent incorporation of TDPSD with epoxy was homogenous. These results together with the char yields in TGA experiments confirmed that the covalent incorporated TDPSD phosphonate units in EP-TDPSDs play a major role in the formation of char during thermal degradation.

The char residues of EP-bl and EP-TDPSD-2.5P after fire tests were also characterized by FTIR to investigate the residue functional groups after decomposition. The broad absorption band at around 1592 cm⁻¹, 1486 cm⁻¹, 1447 cm⁻¹ represents the C=C stretching vibration of polyaromatic carbons. This strong absorption band indicated that the incorporation of TDPSD into the epoxy thermoset enabled formation of sufficient aromatic component in the char. From FT-IR of EP-TDPSD-2.5P char residual 1202 cm⁻¹ and 1168 cm⁻¹ of P=O, at 1088 cm⁻¹, 992 cm⁻¹ and 901 cm⁻¹ P-O were observed, The absorption peak appearing at 973 cm cm⁻¹ was attributed to -P(=O)-O-. It indicated that the condensed phase of EP-TDPSDs contained significant residue rich in phosphorus.

These results demonstrated that the flame retardancy of TDPSD modified epoxy thermosets was not due to one single mechanism but rather a complex combination of mechanisms, including the gas phase mechanism and the condensed phase mechanism **(****Fig. 6****)** both caused by the covalent incorporated phosphonate units. In the combination of gas-phase and condensation phase actions TDPSD acted as co-curing reagent by replacing an accountable amount of carcinogenic amine hardener, and played an important role in improving the thermal stability and flame retardancy of cured EP-TDPSDs, and reduced the production of toxic nitrogen containing evolving gases.

### Results 9 - Summary and conclusions

**N**ovel and improved epoxy thermoset polymers were presented with not only excellent re-processable/recyclable properties but also proven inherent fire protection. And a representative one-pot / two step-process with a varied combination of bisphenol epoxy resin, reactive spirocyclic phosphonate TDPSD and the representative amine hardening agent IPDA was evaluated for the synthesis of these epoxy thermoset polymers. The covalent incorporation of reactive P-H containing TDPSD into the epoxy resin replaced the amine-hardener IPDA in a 2:1 ratio. With increasing TDPSD concentration the dynamic ester bonds containing epoxy thermoset polymers obtain excellent non-flammability, as demonstrated, e.g. for EP-TDPSD-2.5P, optical transparency, reparability after scratching and cutting, and additional recyclability for EP-TDPSD-8P.

For EP-TDPSD-2.5P, TDPSD did improve the thermal stability and flame retardancy of the cured epoxy thermoset polymer via combination of gas-phase and condensation phase of actions, reduced toxic nitrogen containing evolving gases production, thus providing a scalable coating application on MDF for demonstration purposes. The representative agent TDPSD promoted a remarkable reduction up to 48% in the heat release rate (HRR) values, and introduced non-flammability to the MDF plate due to the outstanding gas-phase action and intumescent char structure through isolating heat and oxygen more efficiently. Pyrolysis evolved gas (Py-GC MS and TGA-IR), thermal and fire analysis was used to propose the combined mode (gas phase and char) of action of TDPSD in the fire performance improvement of the EP-TDPSDs epoxy thermoset system. The functional polymer EP-TDPSD-2.5P is one of many potential candidates for fire- and heat-resistant applications in electronic and microelectronic fields with more safety and excellent performance.

And the thermo-mechanical recycling method shown for the vitrimer reformation by compression of heat and pressure demonstrated that TDPSD promoted the reparability and recyclability of the epoxy thermoset polymers EP-TDPSD-6P and EP-TDPSD-8P. Without wishing to be bound by theory, it seems that the reversible P-O ester bond exchange reactions provide for a versatile transesterification that rearranges the network topology while keeping cross-linking and functionality of the covalent links.

## Claims

1. An epoxy thermoset polymer comprising
- 0.5 to 10 wt-% phosphorous,
- phosphonate triple-bonded epoxy thermosets,
wherein the phosphonate forms a chain member within the epoxy thermoset polymer network and is covalently triple bonded to the polymer network via a phosphonate P-C and two P-O bonds.

2. The epoxy thermoset polymer according to claim 1, wherein the polymer comprises 1 to 8 or 2 to 6 wt-% phosphorous.

3. The epoxy thermoset polymer according to claim 1 or 2, wherein the phosphonate in the polymer has formula (I) 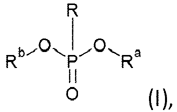 wherein
- R is a reacted epoxy moiety within the epoxy thermoset polymer,
- R^{a} and R^{b} are selected from reacted epoxy moieties and/or a further phosphonate moiety coupled to at least one reacted epoxy moiety within the epoxy thermoset polymer,
- all of R, R^{a} and R^{b} are directly or indirectly bound to reacted epoxy moieties.

4. The epoxy thermoset polymer according to any of claims 1 to 3, wherein the phosphonate in the epoxy thermoset polymer has formula (II) 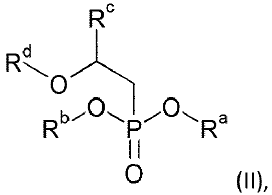 wherein
- R^{a} and R^{b} are reacted epoxy moieties and/or a further phosphonate moiety coupled to at least one epoxy moiety within the epoxy thermoset polymer,
- R^{c} is a reacted epoxy moiety, and
- R^{d} is hydrogen or a reacted epoxy moiety or a phosphonate moiety coupled to at least one reacted epoxy moiety within the thermoset epoxy polymer.

5. The epoxy thermoset polymer according any of claims 1 to 4, wherein the phosphonate within the epoxy thermoset polymer is the result of mono, bis, tris or oligo H-phosphonates, optionally bis-H-phosphonates, optionally pentaerythrityl bis-H-phosphonates, 2,4,8,10-tetraoxa-3,9-diphosphaspiro[5.5]undecane, 3,9-dioxide, or an oligomer of pentaerythrityl bis-H-phosphonates.

6. The epoxy thermoset polymer according any of claims 1 to 5, wherein the epoxy thermoset polymer comprises 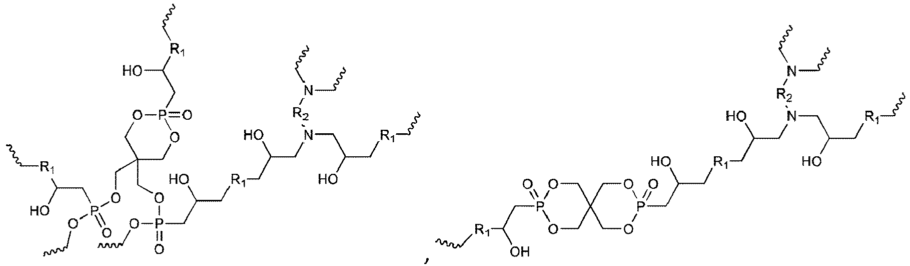 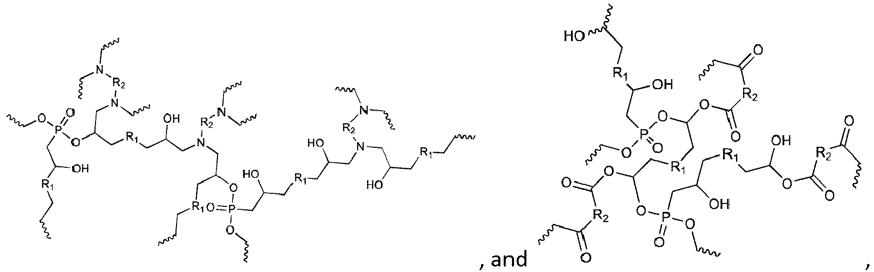 wherein
the wave lines form part of the epoxy thermoset polymer network,
R₁ are epoxy resin moieties,
and R₂ are epoxy hardener moieties, optionally amine or carboxylic epoxy hardener moieties.

7. The epoxy thermoset polymer according to any of claims 1 to 6, wherein the epoxy moieties, optionally R₁, are selected from the group consisting of bisphenol-based, bisphenol-A-based, aliphatic, cycloaliphatic, aromatic, bis, tris and multifunctional, halogenated, Novolak, glycidylamine-based epoxy resins and other epoxy resins based on the epoxy of formula (III) 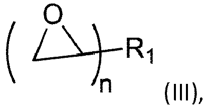 wherein R₁ is optionally selected from the group consisting of 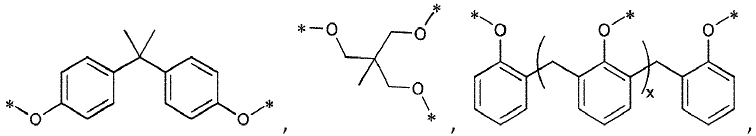 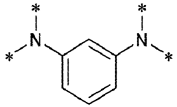 wherein
^{∗} are bonding points
n is 2 to 4; and
x is 0 to 4.

8. The thermoset epoxy polymer according any of claims 1 to 7, wherein the epoxy hardener moiety, optionally R₂, is selected from the group consisting of amine epoxy hardeners, carboxylic epoxy hardeners, anhydride epoxy hardeners, acid anhydride epoxy hardeners, and acid epoxy hardeners, optionally selected from the group of amine epoxy hardeners according to formula (V)
R₂-(NH₂)ₘ (V),
wherein R₂ is selected from the group consisting of 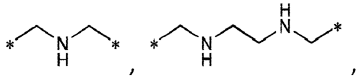 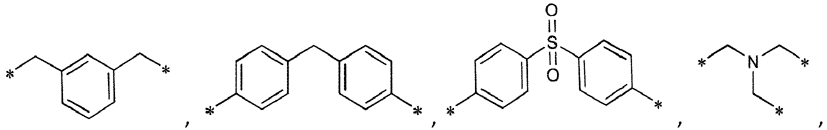 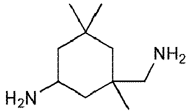 , and
m is 1, 2 or 3
^{∗} indicates the attachment bond of R₂,
optionally selected from the group of acid anhydride and carboxylic acid hardeners, optionally 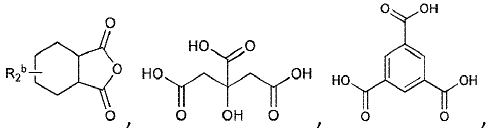 wherein R₂^{b} is H or CH₃.

9. A method for preparing an epoxy thermoset polymer according to any of claims 1 to 8 comprising the steps:
(a) providing epoxy resin reactants;
(b) adding, mixing and reacting an H-phosphonate, optionally selected from the group consisting of mono, bis, tris and oligo H-phosphonates, pentaerythrityl bis-H-phosphonates, 2,4,8,10-tetraoxa-3,9-diphosphaspiro[5.5]undecane, 3,9-dioxide, and oligomers of pentaerythrityl bis-H-phosphonates, with the epoxy resin reactants, , optionally with organic base, optionally with 1,5,7-triazabicyclo[4.4.0]dec-5-en) (TBD),optionally heating, optionally heating to 50 to 90 °C;
(c) adding, mixing and reacting at least one epoxy thermoset hardener to the composition of (b);
(d) heating the composition, optionally heating from 50 to 200°C, optionally from 80 to 160 °C, optionally for 1 to 20, optionally 4 to 10 hours;
wherein optionally a transesterification catalyst can be added in step (b), (c) or (d) (vitrimer formation), optionally heating to activate transesterification.

10. The method of claim 9, wherein a transesterification catalyst is added in step (b).

11. The method of claim 9 or 10, wherein epoxy resin reactants are selected from the group consisting of bisphenol-based, optionally bisphenol-A-based, aliphatic, cycloaliphatic, aromatic, bis, tris and multifunctional, halogenated, Novolak, bio- and glycidylamine-based epoxy resins.

12. The method of any of claims 9 to 11, wherein the curing agent is selected from the group consisting of aliphatic or aromatic amines, carboxylic anhydrides, carboxylic acids, and polyols.

13. An epoxy thermoset polymer according to any of claims 1 to 8 obtained or obtainable by a method according to any of claims 9 to 12.

14. Use of a thermoset epoxy polymer according to any of claims 1 to 8 for fire safe materials, optionally fire safe polymers or composites, fire safe textiles, re-processable polymers or composites, damage reparable polymers, composites or coatings, 3D-printable polymers and composites, extrudable polymers and composites.

15. A product selected from the group consisting of fire safe materials, optionally fire safe polymers or composites, fire safe textiles, re-processable polymers or composites, damage reparable polymers, composites or coatings, 3D-printable polymers and composites, extrudable polymers and composites comprising a thermoset epoxy polymer according to any of claims 1 to 8.
